# EUROPÄISCHE PATENTSCHRIFT

(11) **EP 0 838 387 B1**
(45) Veröffentlichungstag und Bekanntmachung des Hinweises auf die Patenterteilung: **12.12.2001**
(21) Anmeldenummer: 97117993.2
(22) Anmeldetag: 17.10.1997
(51) Int. Cl.: B62D 1/18

(54) **Verkleidung für eine axial und in der Höhe verstellbare Lenksäule**
Cover for an axially and angulary adjustable steering column
Habillage pour une colonne de direction réglable axialement et angulairement

(30) Priorität: 24.10.1996 DE 19644171
(43) Veröffentlichungstag der Anmeldung: 29.04.1998
(73) Patentinhaber: ADAM OPEL AG, 65423 Rüsselsheim (DE)
(72) Erfinder: Hemetsberger, Anton, A-4841 Ungenach (AT); Greil, Jürgen, D-80807 München (DE)
(74) Vertreter: Daniel, Ulrich W.P.

(56) Entgegenhaltungen:
- EP-A- 0 304 650
- DE-A- 2 922 425
- DE-A- 3 933 288
- DE-A- 19 525 181
- DE-C- 4 138 583
- US-A- 5 573 273

## Beschreibung

Die Erfindung betrifft eine Verkleidung einer axial und in der Höhe verstellbaren Lenksäule, mit den im Oberbegriff des Patentanspruches 1 angegebenen Merkmalen.

Eine derartige Verkleidung beschreibt die DE-A-195 25 181, bei der zur Abdeckung eines veränderlichen Spaltes zwischen einer Armaturentafel und einem mit der Lenksäule verbundenen Verkleidungsteil ein Abdeckteil vorgesehen ist, welches mittels an den Rändern des Abdeckteils angeordneten umlaufenden Profilleisten sowohl am Verkleidungsteil als auch an der Armaturentafel gehalten ist. Der Bereich zwischen den Rändern des Abdeckteils ist dabei flexibel gestaltet, um eine Verstellung der Lenksäule in der axialen und vertikalen Richtung zu ermöglichen.

Auch in der DE 41 38 583 C1 ist eine Verkleidung für eine verstellbare Lenksäule beschrieben, die zur Schließung eines Spaltes zwischen einem Gehäuse und einem in diesem Gehäuse verschiebbar gelagerten Mantelrohr als Kappe ausgebildet ist. Diese Verkleidung weist bei einteiliger Ausbildung unterschiedliche Elastizitäten in der axialen Richtung der Lenksäule und in einer Richtung quer zu der axialen Richtung.

Solche bekannte Verkleidungen sind jedoch gegen äußere Einflüsse, welche beispielsweise bei der Montage, Reparatur oder Reinigung der Lenksäule auftreten können, empfindlich und können bei verschiedenen Stellungen der Lenksäule ein ungleichmäßiges Erscheinungsbild der Verkleidung hervorrufen.

Die Aufgabe der vorliegenden Erfindung besteht nun darin, die Haltbarkeit und das äußere Aussehen einer Verkleidung nach dem Oberbegriff des Patentanspruches 1 mit einfachen Mittel zu verbessern.

Diese Aufgabe wird durch die im Kennzeichen des Patentanspruches 1 genannten Merkmale gelöst. Vorteilhafte Weiterbildungen der Erfindung sind in den Unteransprüchen angegeben.

Durch die erfindungsgemäße verschiebbare Lagerung des Abdeckteils an der Armaturentafel kann die Lenksäule sowohl in axialer Richtung als auch in der Höhe komfortabel verstellt werden, während das Abdeckteil für den Spalt an der Armaturentafel mittels einer Haltevorrichtung ständig am Verkleidungsteil gehalten ist. Die formsteife Ausbildung des Abdeckteils ermöglicht dabei ein gleichmäßiges Erscheinungsbild sowie eine höhere Haltbarkeit gegen äußere Einflüsse.

Die Erfindung läßt zahlreiche Ausführungsformen zu. Zur weiteren Verdeutlichung ihres Grundprinzips werden zwei davon anhand einer Zeichnung näher erläutert. Die Zeichnung zeigt teilweise schematisch in
- Fig. 1: eine an der Armaturentafel eines Kraftfahrzeuges angeordnete Lenksäule mit einer erfindungsgemäßen Verkleidung, teilweise geschnitten;
- Fig. 2: einen Schnitt gemäß Linie C-C in Fig. 1, vergrößert dargestellt;
- Fig. 3: eine Schnittdarstellung gemäß Fig. 2, jedoch mit einer alternativen Ausbildung der verschiebbaren Lagerung des Abdeckteils an der Armaturentafel;
- Fig. 4: eine vergrößerte Darstellung eines Ausschnittes im Bereich der Lagerung des Abdeckteils nach Fig. 3.

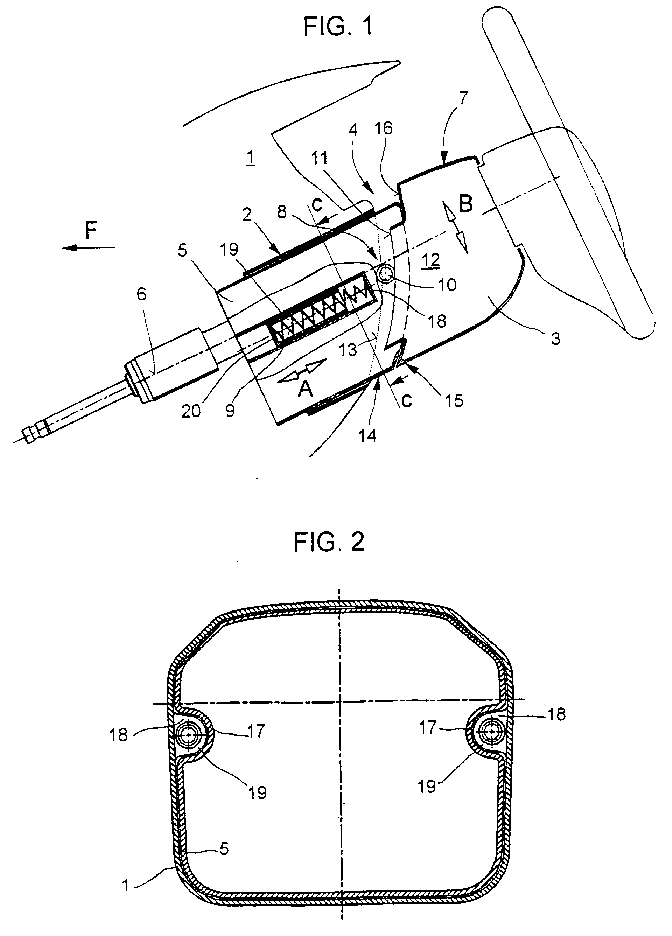

Fig. 1 zeigt eine an der Armaturentafel 1 eines nicht dargestellten Kraftfahrzeuges angeordnete Lenksäule 2, welche gemäß Pfeilrichtungen **A** und **B** entsprechend axial und in der Höhe verstellbar ausgebildet ist. Bei der Verstellung in der Höhe (Pfeilrichtung **B**) schwenkt die Lenksäule 2 um einen nicht dargestellten, aber in Fahrtrichtung **F** weiter vorne auf der Lenksäulenachse 6 liegenden Drehpunkt.

An der Lenksäule 2 ist im lenkradnahen Bereich 7 ein die Lenksäule 2 umhüllendes Verkleidungsteil 3 vorgesehen, welches zur Bildung eines Spaltes 4 zwischen der Armaturentafel 1 und dem Verkleidungsteil 3 beabstandet zur Armaturentafel 1 angeordnet ist. Der Spalt 4 ist notwendig, um eine Freigängigkeit der Lenksäule 2 gegenüber der Armaturentafel 1 bei axialen und vertikalen Verstellungen der Lenksäule 2 zu gewährleisten.

Wie aus Fig. 1 weiterhin ersichtlich, ist zur Abdeckung des Spaltes 4 an der Armaturentafel 1 ein axial verschiebbares Abdeckteil 5 vorgesehen, welches mittels einer Haltevorrichtung 8 geringfügig beabstandet zum Verkleidungsteil 3 gehalten ist. Die Haltevorrichtung 8 besteht im wesentlichen aus zwei beiderseits der Lenksäule angeordneten Federn 9 und zwei jeweils als Gleitnocken ausgebildeten und mit dem Abdeckteil 5 verbundenen Abstützteilen 10, welche ebenfalls beiderseits der Lenksäule 2 angeordnet und mit Vorspannung gegen jeweils eine am Verkleidungsteil 3 vorgesehene Führungsbahn 11 anliegen. Die Führungsbahnen 11 sind dabei kreisförmig an den jeweiligen Seitenabschnitten 12 des Verkleidungsteils 3 ausgebildet.

Die Radieneinsatzpunkte der Führungsbahnen 11 befinden sich zwischen der Armaturentafel 1 und einer nicht dargestellten, aber in Fahrtrichtung **F** gesehen weiter vorne liegenden Stirnwand des Kraftfahrzeuges. Diese Radieneinsatzpunkte sind so gewählt, daß die Führungsbahnen 11 etwa parallel zu der Kontur der Armaturentafel 1 (gestrichelte Linie 13) im Bereich der Öffnung für das Abdeckteil 5 verlaufen.

Die Abstützteile 10 sind in axialer Richtung derart am Abdeckteil 5 angeordnet, daß die einander zugewandten Endbereiche 14, 15 von Abdeckteil 5 und Verkleidungsteil 3 in allen Stellungen der Lenksäule 2 geringfügig voneinander beabstandet sind. Am Endbereich 15 ist dabei eine ausgedehnte Abdichtfläche 16 vorgesehen, die parallel bzw. konzentrisch zu den Führungsbahnen 11 ausgebildet ist.

In Fig. 2 ist vereinfacht ein Querschnitt durch das Abdeckteil 5 im Bereich der Feder 9 und die angrenzenden Bereiche der Armaturentafel 1 dargestellt (Schnitt **C-C** in Fig. 1). Wie daraus ersichtlich, ist das Abdeckteil 5 kastenförmig ausgebildet und weist an seinen beiden Seiten jeweils eine nach innen gerichtete und im Querschnitt etwa halbkreisförmige Gleitführung 17 auf, welche etwa parallel zur Lenksäulenachse 6 (Fig. 1) ausgerichtet ist. An der Armaturentafel 1 sind ebenfalls halbkreisförmige Aufnahmen 19 vorgesehen, welche bei der axialen Verschiebung des Abdeckteils 5 in den Gleitführungen 17 gleiten.

Die Gleitführungen 17 weisen, wie aus Fig. 1 ersichtlich, jeweils am zum Verkleidungsteil 3 hin zugewandten Ende einen Querboden 18 auf. An der jeweiligen Aufnahme 19 ist ebenfalls am vom Verkleidungsteil 3 abgewandten Ende ein Querboden 20 vorgesehen. In dem so gebildeten Hohlraum 21 zwischen der Gleitführung 17 bzw. der Aufnahme 19 und der Armaturentafel 1 ist die das Abdeckteil 5 gegen das Verkleidungsteil 3 vorspannende Feder 9 untergebracht. Die Feder 9 stützt sich einerseits am Querboden 18 und andererseits am Querboden 20 ab.

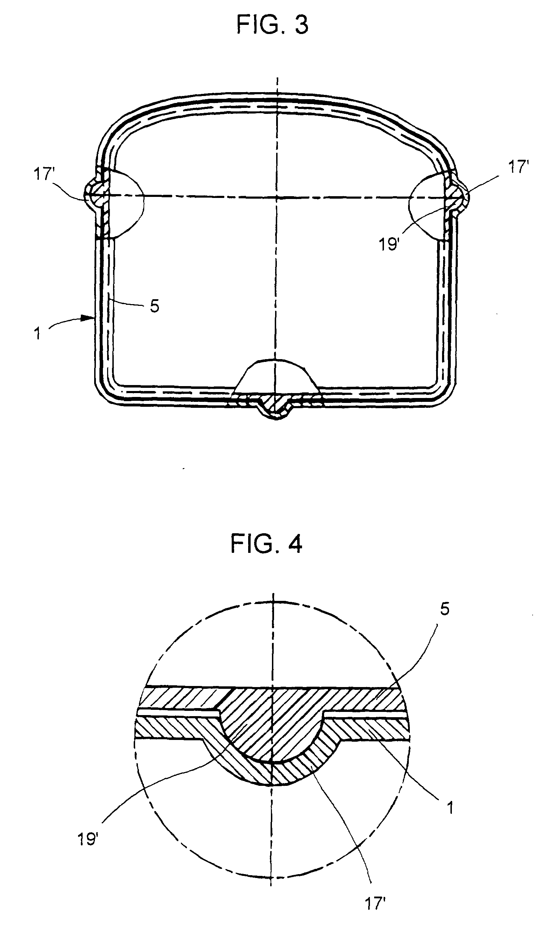

In Fig. 3 und Fig. 4 ist eine alternative verschiebbare Lagerung des Abdeckteils 5 an der Armaturentafel 1 dargestellt, welche auch als eine zusätzliche Führungs- bzw. Stützmaßnahme zu der verschiebbaren Lagerung des Abdeckteils 5 nach Fig. 1 und Fig. 2 verwendet werden kann.

Bei dieser Ausbildung sind, wie in Fig. 4 vergrößert dargestellt, die Gleitführungen 17' im Vergleich zu den Gleitführungen 17 (Fig. 2) an der Armaturentafel 1 in der entgegengesetzten Richtung (weg vom Abdeckteil 5) ausgebildet. Die in den Gleitführungen 17' geführten Aufnahmen 19' sind dabei im Vergleich zu den Aufnahmen 19 (Fig. 2) am Abdeckteil 5 ausgebildet. Die Anordnung der das Abdeckteil 5 gegen das Verkleidungsteil 3 (Fig. 1) vorspannenden Feder 9 wird bei dieser Ausführung nicht beschrieben. Die Feder 9 kann aber auf eine an sich bekannte Art außerhalb des Abdeckteils 5 angeordnet sein.

Die Ausbildung nach Fig. 3 und Fig.4 hat den Vorteil, daß das Abdeckteil 5 im Querschnitt insgesamt kleiner als bei der Ausführung nach Fig. 1 und Fig. 2 ausgebildet ist, wodurch mehr Raum für Bedienungs- bzw. Anzeigevorrichtungen an der Armaturentafel 1 zur Verfügung steht.

## Patentansprüche

1. Verkleidung für eine axial und in der Höhe verstellbare Lenksäule (2) eines Kraftfahrzeuges mit einem Abdeckteil (5) für einen veränderlichen Spalt (4) zwischen einem mit der Lenksäule (2) verbundenen Verkleidungsteil (3) und einer gegenüberliegenden Armaturentafel (1) des Kraftfahrzeuges, wobei das Abdeckteil (5) formsteif ausgebildet und an der Armaturentafel (1) etwa in Richtung der Lenksäulenachse (6) verschiebbar gelagert ist, **dadurch gekennzeichnet, daß** das Abdeckteil (5) am Verkleidungsteil (3) mittels einer Haltevorrichtung (8) in axialer Richtung gehalten ist, wobei die Haltevorrichtung (8) zum Verschieben von Abdeckteil (5) und Verkleidungsteil (3) relativ zueinander in einer zu der axialer Richtung etwa senkrecht verlaufenden Richtung (Schwenkrichtung **B**) ausgebildet ist.

2. Verkleidung nach Anspruch 1, **dadurch gekennzeichnet, daß** das Abdeckteil (5) in Gleit- oder Rollenführungen der Armaturentafel (1) verschiebbar aufgenommen ist und zumindest im Bereich des Spaltes (4) eine geschlossene Querschnittskontur aufweist.

3. Verkleidung nach Anspruch 1 oder 2, **dadurch gekennzeichnet, daß** die Haltevorrichtung (8) zumindest ein mit dem Abdeckteil (5) verbundenes Abstützteil (10) aufweist, welches mit einer am Verkleidungsteil (3) vorgesehenen Führungsbahn oder -linie (11) zusammenwirkt.

4. Verkleidung nach Anspruch 3, **dadurch gekennzeichnet, daß** die Führungsbahn oder -linie (11) etwa parallel zur Kontur der Armaturentafel (1) im Bereich der Öffnung für das Abdeckteil (5) ausgebildet ist.

5. Verkleidung nach einem der Ansprüche 1 bis 4, **dadurch gekennzeichnet, daß** die einander zugewandten Endbereiche (14, 15) von Abdeckteil (5) und Verkleidungsteil (3) geringfügig beabstandet sind, wobei zumindest ein Endbereich (14 bzw. 15) eine etwa in der Schwenkrichtung **B** ausgedehnte Abdichtfläche (16) aufweist.

6. Verkleidung nach einem der Ansprüche 3 bis 5, **dadurch gekennzeichnet,** die Seitenabschnitte (12) der Endbereiche (14, 15) parallel zur Führungsbahn oder -linie (11) verlaufen.

7. Verkleidung nach einem der Ansprüche 1 bis 6, **dadurch gekennzeichnet, daß** die Haltevorrichtung (8) zumindest eine etwa in axialer Richtung der Lenksäule (2) wirkende Feder (9) aufweist, welche sich einerseits an der Armaturentafel (1) oder Teilen davon und andererseits am Abdeckteil (5) abstützt und das Abdeck- bzw. Abstützteil (5 bzw. 10) gegen die Führungsbahn oder -linie (11) vorspannt.

8. Verkleidung nach einem der Ansprüche 3 bis 6, **dadurch gekennzeichnet, daß** die Führungsbahn oder -linie (11) von zumindest einer Kante eines am Abdeckteil (5) oder Führungsteil (3) vorgesehenen und in Schwenkrichtung **B** liegenden Führungsschlitzes gebildet ist.

9. Verkleidung nach einem der Ansprüche 3 bis 8, **dadurch gekennzeichnet, daß** die Führungsbahn oder -linie (11)zumindest bereichsweise kreisförmig mit einem zwischen der Armaturentafel (1) und einer Stirnwand des Kraftfahrzeuges liegenden Radieneinsatzpunkt ausgebildet ist.

## Claims

1. Shroud for a steering column (2) of a motor vehicle which is adjustable axially and in height, with a cover portion (5) for a variable gap (4) between a shroud portion (3) connected to the steering column (2) and an opposite instrument panel (1) of the motor vehicle, wherein the cover portion (5) is of dimensionally stable construction and mounted on the instrument panel (1) so as to be slidable approximately in the direction of the steering column shaft (6), **characterised in that** the cover portion (5) is held in the axial direction on the shroud portion (3) by means of a holding device (8), wherein the holding device (8) is designed for the sliding of cover portion (5) and shroud portion (3) relative to each other in a direction running approximately perpendicularly to the axial direction (pivot direction B).

2. Shroud according to claim 1, **characterised in that** the cover portion (5) is held slidably in sliding or roller guides of the instrument panel (1) and has a closed cross-sectional contour at least in the region of the gap (4).

3. Shroud according to claim 1 or 2, **characterised in that** the holding device (8) comprises at least one support portion (10) which is connected to the cover portion (5) and which cooperates with a guide track or line (11) provided on the shroud portion (3).

4. Shroud according to claim 3, **characterised in that** the guide track or line (11) is constructed approximately parallel to the contour of the instrument panel (1) in the region of the opening for the cover portion (5).

5. Shroud according to any of claims 1 to 4, **characterised in that** the end regions (14, 15) of cover portion (5) and shroud portion (3) which face towards each other are slightly spaced apart, wherein at least one end region (14 or 15) comprises a sealing surface (16) extending approximately in the pivot direction B.

6. Shroud according to any of claims 3 to 5, **characterised in that** the side sections (12) of the end regions (14, 15) run parallel to the guide track or line (11).

7. Shroud according to any of claims 1 to 6, **characterised in that** the holding device (8) comprises at least one spring (9) which acts approximately in the axial direction of the steering column (2) and which is supported on the one hand on the instrument panel (1) or portions thereof and on the other hand on the cover portion (5) and biases the cover or support portion (5 or 10) towards the guide track or line (11).

8. Shroud according to any of claims 3 to 6, **characterised in that** the guide track or line (11) is formed by at least one edge of a guide slot provided on the cover portion (5) or guide portion (3) and located in the pivot direction B.

9. Shroud according to any of claims 3 to 8, **characterised in that** the guide track or line (11) at least in some regions is of circular construction with a radius application point located between the instrument panel (1) and a dashboard of the motor vehicle.

## Revendications

1. Habillage pour une colonne de direction (2) réglable dans la direction axiale et en hauteur d'un véhicule automobile, comportant un élément formant cache (5) pour un espace variable (4) entre un élément d'habillage (3) lié à la colonne de direction (2) et une planche de bord (1) du véhicule, située en vis-à-vis, l'élément formant cache (5) étant indéformable et étant monté sur la planche de bord (1) de manière à pouvoir coulisser sensiblement dans la direction de l'axe (6) de la colonne de direction, **caractérisé en ce que** l'élément formant cache (5) est lié à l'élément d'habillage (3) dans la direction axiale au moyen d'un dispositif de retenue (8), le dispositif de retenue (8) étant agencé de manière à permettre le déplacement de l'élément formant cache (5) et de l'élément d'habillage (3) l'un par rapport à l'autre dans une direction sensiblement perpendiculaire (direction de pivotement) à la direction axiale.

2. Habillage selon la revendication 1, **caractérisé en ce que** l'élément formant cache (5) est monté coulissant dans des glissières lisses ou à galets de la planche de bord (1) et, au moins dans la région de l'espace (4), présente un contour fermé en section droite.

3. Habillage selon la revendication 1 ou 2, **caractérisé en ce que** le dispositif de retenue (8) comporte au moins un élément d'appui (10) lié à l'élément formant cache (5), qui coopère avec une glissière ou une ligne de guidage (11) prévue sur l'élément d'habillage (3).

4. Habillage selon la revendication 3, **caractérisé en ce que** la glissière ou la ligne de guidage (11) est sensiblement parallèle au contour de la planche de bord (1) dans la région de l'ouverture pour l'élément formant cache (5).

5. Habillage selon une des revendications 1 à 4, **caractérisé en ce que** les parties d'extrémité (14, 15) tournées l'une vers l'autre de l'élément formant cache (5) et de l'élément d'habillage (3) sont faiblement espacées l'un de l'autre, au moins une partie d'extrémité (14 ou 15) présentant une surface d'étanchéité (16) qui s'étend sensiblement dans la direction de pivotement B.

6. Habillage selon une des revendications 3 à 5, **caractérisé en ce que** les côtés des parties d'extrémité (14, 15) s'étendent parallèlement à la glissière ou à la ligne de guidage (11).

7. Habillage selon une des revendications 1 à 6, **caractérisé en ce que** le dispositif de retenue (8), comporte au moins un ressort (9) qui agit sensiblement dans la direction axiale de la colonne de direction (2), prend appui d'un côté sur la planche de bord (1) ou des parties de celle-ci et de l'autre sur l'élément formant cache (5) et précontraint l'élément formant cache ou l'élément d'appui (5 ou 10) en direction de la glissière ou de la ligne de guidage (11).

8. Habillage selon une des revendications 3 à 6, **caractérisé en ce que** la glissière ou la ligne de guidage (11) est formée par au moins un bord d'une lumière de guidage prévue sur l'élément formant cache (5) ou l'élément de guidage (3), qui s'étend dans la direction de pivotement.

9. Habillage selon une des revendications 3 à 8, **caractérisé en ce que** la glissière ou la ligne de guidage (11), au moins localement, est circulaire, avec le centre du cercle situé entre la planche de bord (1) et une paroi frontale du véhicule.
